# EUROPEAN PATENT APPLICATION

(11) **EP 2 437 558 A1**
(43) Date of publication of application: **04.04.2012**
(21) Application number: 09846351.6
(22) Date of filing: 22.06.2009
(51) Int. Cl.: H04W 72/00

(54) **POLICY INFORMATION PROCESSING METHOD, DEVICE AND SYSTEM**

(71) Applicant: Huawei Technologies Co., Ltd., Longgang District, Shenzhen Guangdong 518129 (CN)
(72) Inventor: WANG, Shanshan, Shenzhen Guangdong 518129 (CN); ZHOU, Qing, Shenzhen Guangdong 518129 (CN); PAMPU, Cornel, Shenzhen Guangdong 518129 (CN); MARCO, Spini, Shenzhen Guangdong 518129 (CN)
(74) Representative: Körber, Martin Hans
(86) International application number: PCT/CN2009/072389
(87) International publication number: WO 2010/148551

(57) **Abstract**

A method, a device, and a system for processing policy information are provided. A method includes: obtaining applicability information and policy information according to information reported by a User Equipment (UE), where the applicability information indicates an applicability scope of the policy information and includes at least one of subscriber granularity, subscriber information, UE type, network granularity, and network identification information; and delivering the policy information and the applicability information to the UE. Another method includes: receiving policy information delivered by an Access Network Discovery and Selection Function (ANDSF), obtaining applicability information corresponding to the policy information, and storing the policy information and the applicability information; and determining an applicability scope of the policy information according to the applicability information. In the technical solution which enables the UE to obtain the applicability information herein, the UE can determine the applicability scope of the policy information according to the applicability information, and select and utilize the policy information flexibly, thereby optimizing utilization of network resources.

## Description

### FIELD OF THE INVENTION

The present invention relates to radio communication technologies, and in particular, to a method, a device, and a system for processing policy information.

### BACKGROUND OF THE INVENTION

To meet the challenge of radio broadband technologies and keep advantages of the 3rd Generation Partnership Project (3GPP) network, the 3GPP organization puts forward a Long Term Evolution (LTE) plan, and defines new mobile communication network architecture under guidance of the LTE. This architecture is flatter than the existing General Packet Radio Service (GPRS) or Universal Mobile Telecommunications System (UMTS) architecture, and retains only the Packet Switched (PS) domain. Therefore, this architecture is also known as an Evolved Packet System (EPS).

The EPS is a network architecture that supports handover between an Evolution UMTS Radio Access Network (E-UTRAN) and a Code Division Multiple Access (CDMA) 2000 network. An important feature of the EPS is integration of multiple access modes. Both a 3GPP User Equipment (UE) and a non-3GPP UE can access an EPS network. In this way, a subscriber is allowed to use diverse access modes flexibly. Non-3GPP networks include, but are not limited to, Worldwide Interoperability for Microwave Access (WiMax), Wireless Local Area Network (WLAN), and Code Division Multiple Access (CDMA) networks.

A UE capable of accessing different networks needs to open the radio interface to scan networks available for accessing, and obtain information about the networks to decide whether to initiate network reselection or handover. However, a single-mode UE which can open only one radio interface at a time needs to close the radio interface that processes a service currently before the UE can open another radio interface to scan networks, which leads to an interruption of the current service; a multi-mode UE which can open multiple radio interfaces at a time can scan various access networks at a time, but too much battery power is consumed. To solve such problems, an Access Network Discovery and Selection Function (ANDSF) is introduced in the EPS in the prior art. The UE may discover the ANDSF after accessing the EPS, and the ANDSF sends policy information related to the access network to the UE according to relevant policies of the operator and the network topology. The UE selects the access network and the access policy according to the policy information, thereby saving the complicated process of discovering and selecting the access network.

However, in the process of developing the present invention, the inventor finds that the prior art has at least the following defects: the UE is not flexible in selecting and utilizing the policy information. For example, after the UE gets attached to the EPS and obtains the policy information delivered by the ANDSF, if the UE is powered off and then powered on again, the UE must request policy information from the ANDSF again. Even if the subscriber information and the access mode of the UE remain unchanged at this time, the UE is unable to choose to reuse the policy information. The UE is not flexible in selecting and utilizing the policy information, the network load may increase as a result of repeated retransmission of the policy information, and the network resources are wasted.

### SUMMARY OF THE INVENTION

Embodiments of the present invention provide a method, a device, and a system for processing policy information, so that a UE can select and utilize policy information more flexibly and optimize utilization of network resources.

An embodiment of the present invention provides a method for processing policy information, including:
obtaining applicability information and policy information according to information reported by a UE, where the applicability information indicates an applicability scope of the policy information and includes at least one of subscriber granularity, subscriber information, UE type, network granularity, and network identification information; and
delivering the policy information and the applicability information to the UE.

An embodiment of the present invention provides another method for processing policy information, including:
receiving policy information delivered by an ANDSF, obtaining applicability information corresponding to the policy information, and storing the policy information and the applicability information, where the applicability information includes at least one of subscriber granularity, subscriber information, UE type, network granularity, and network identification information; and
determining an applicability scope of the policy information according to the applicability information corresponding to the policy information.

An embodiment of the present invention provides a device for processing policy information, including:
an information receiving module, configured to receive information reported by a UE;
a first information obtaining module, configured to obtain policy information and applicability information according to the information reported by the UE, where the applicability information indicates an applicability scope of the policy information and includes at least one of subscriber granularity, subscriber information, UE type, network granularity, and network identification information; and
an information delivering module, configured to deliver the policy information and the applicability information to the UE.

An embodiment of the present invention provides a UE, including:
a second information obtaining module, configured to receive policy information delivered by an ANDSF and obtain applicability information corresponding to the policy information, where the applicability information includes at least one of subscriber granularity, subscriber information, UE type, network granularity, and network identification information;
an information storing module, configured to store the policy information and the applicability information; and
an applicability scope determining module, configured to determine an applicability scope of the policy information according to the applicability information corresponding to the policy information.

An embodiment of the present invention provides a system for processing policy information, including:
an ANDSF, configured to obtain applicability information and policy information according to information reported by a UE, and deliver the policy information and the applicability information to the UE, where the applicability information indicates an applicability scope of the policy information; and
the UE, configured to receive the policy information delivered by the ANDSF, obtain the applicability information corresponding to the policy information, store the policy information and the applicability information, and determine the applicability scope of the policy information according to the applicability information corresponding to the policy information.

As known from the technical solutions, the embodiments of the present invention enable the UE to obtain applicability information corresponding to the policy information delivered by the ANDSF and determine the applicability scope of the policy information. Therefore, the UE can determine the applicability scope of the policy information according to the applicability information, and select and utilize the policy information flexibly, thereby optimizing utilization of network resources.

### BRIEF DESCRIPTION OF THE DRAWINGS

FIG. 1 is a schematic diagram of a network architecture that serves as a basis of a method for processing policy information according to an embodiment of the present invention;

FIG. 2 is a flowchart of a method for processing policy information according to Embodiment 1 of the present invention;

FIG. 3 is a flowchart of a method for processing policy information according to Embodiment 2 of the present invention;

FIG. 4 is a flowchart of a method for processing policy information according to Embodiment 3 of the present invention;

FIG. 5 is a flowchart of a method for processing policy information according to Embodiment 4 of the present invention;

FIG. 6 is a flowchart of a method for processing policy information according to Embodiment 5 of the present invention;

FIG. 7 is a flowchart of a method for processing policy information according to Embodiment 6 of the present invention;

FIG. 8 is a signaling flowchart of a method for processing policy information according to Embodiment 7 of the present invention;

FIG. 9 is a signaling flowchart of a method for processing policy information according to Embodiment 8 of the present invention;

FIG. 10 is a signaling flowchart of a method for processing policy information according to Embodiment 9 of the present invention;

FIG. 11 is a signaling flowchart of a method for processing policy information according to Embodiment 10 of the present invention;

FIG. 12 is a signaling flowchart of a method for processing policy information according to Embodiment 11 of the present invention;

FIG. 13 is a signaling flowchart of a method for processing policy information according to Embodiment 12 of the present invention;

FIG. 14 is a signaling flowchart of a method for processing policy information according to Embodiment 13 of the present invention;

FIG. 15 is a signaling flowchart of a method for processing policy information according to Embodiment 14 of the present invention;

FIG. 16 is a flowchart of a method for processing policy information according to Embodiment 15 of the present invention;

FIG. 17 is a flowchart of a method for processing policy information according to Embodiment 16 of the present invention;

FIG. 18 is a signaling flowchart of a method for processing policy information according to Embodiment 17 of the present invention;

FIG. 19 is a schematic structure diagram of a device for processing policy information according to Embodiment 18 of the present invention;

FIG. 20 is a schematic structure diagram of a UE according to Embodiment 19 of the present invention;

FIG. 21 is a schematic structure diagram of a UE according to Embodiment 20 of the present invention;

FIG. 22 is a schematic structure diagram of a UE according to Embodiment 21 of the present invention;

FIG. 23 is a schematic structure diagram of a UE according to Embodiment 22 of the present invention;

FIG. 24 is a schematic structure diagram of a UE according to Embodiment 23 of the present invention; and

FIG. 25 is a schematic structure diagram of a system for processing policy information according to Embodiment 24 of the present invention.

### DETAILED DESCRIPTION OF THE EMBODIMENTS

The present invention is described in detail hereunder with reference to exemplary embodiments and accompanying drawings.

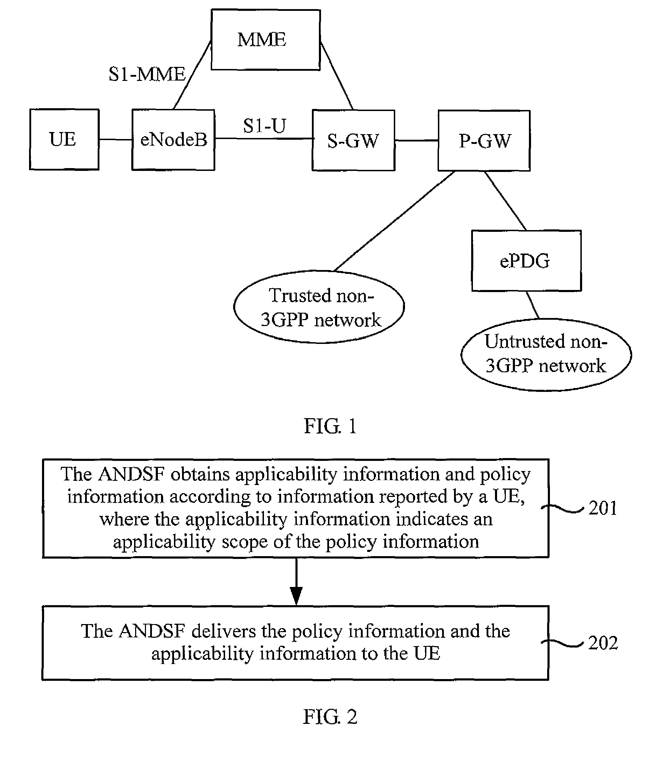

FIG. 1 is a schematic diagram of a network architecture that serves as a basis of a method for processing policy information according to an embodiment of the present invention. Specifically, the network architecture is an EPS network capable of integrating multiple access modes. Basic network elements in an EPS network include an eNodeB, a Mobility Management Entity (MME), a Serving GateWay (S-GW), a Packet Data Network Gateway (P-GW), and an evolved Packet Data Gateway (ePDG).

Based on the EPS network architecture, the UE may use various access technologies to access the EPS through an eNodeB, and the P-GW may access different networks respectively. The P-GW may access trusted non-3GPP networks such as a WiMax network, and may access untrusted non-3GPP networks such as a WLAN through an ePDG. After the UE gets attached to the EPS network, the P-GW allocates an IP address, and discovers the ANDSF through a Domain Name Service (DNS) or a Dynamic Host Configuration Protocol (DHCP). The UE gets registered with the ANDSF, and sets up a Security Association (SA) with the ANDSF. The UE initiates a policy request to the ANDSF to obtain policy information, and then determines the access mode and the access policy according to the policy information. Policy information may include inter-system motion policy and access network discovery information. An inter-system motion policy is a group of rules defined by the operator to influence an inter-system motion decision made by the UE, and the rules include when to enable/disable inter-system motion, and include information about a preferred access technology. The access network discovery information includes the type of access technologies applicable to the current location of the UE, access network information, and conditions for validating the information such as a location condition for validating the information.

The method for processing policy information in the embodiments of the present invention is especially applicable to the interaction between an ANDSF and a UE capable of accessing diverse networks, and to processing of policy information. Taking the EPS network architecture shown in FIG. 1 as an example, the following embodiments describe how to implement the method for processing policy information in an EPS network.

### Embodiment 1

FIG. 2 is a flowchart of a method for processing policy information according to Embodiment 1 of the present invention. The method in this embodiment is implemented by an ANDSF on the network side. The method includes the following steps:

Step 201: The ANDSF obtains applicability information and policy information according to information reported by a UE, where the applicability information indicates an applicability scope of the policy information and includes at least one of subscriber granularity, subscriber information, UE type, network granularity, and network identification information. For example, the applicability information indicates whether the policy information is applicable to network granularity or subscriber granularity, types of UEs to which the policy information is applicable, and the subscriber to whom the policy information is applicable.

Step 202: The ANDSF delivers the policy information and the applicability information to the UE.

Through the technical solution of this embodiment, the ANDSF delivers policy information to the UE and delivers applicability information corresponding to the policy information, and therefore, the UE can identify the applicability scope of the policy information according to the applicability information, and select and utilize the policy information flexibly, thereby optimizing utilization of network resources.

The generation of the policy information may occur before or after the generation of the applicability information, and the delivery of the policy information may occur before or after the delivery of the applicability information. The following gives details through embodiments.

### Embodiment 2

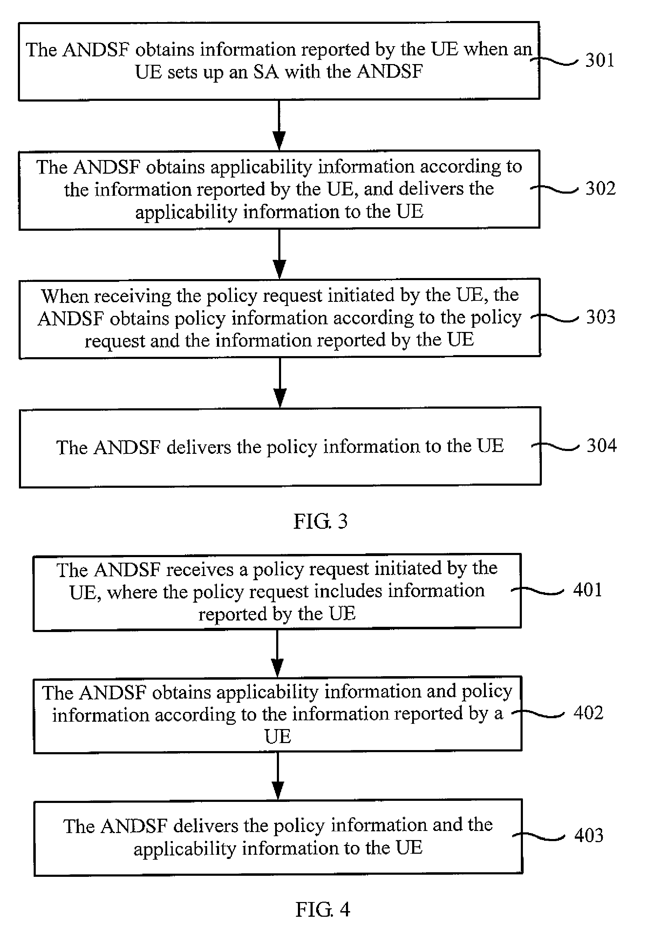

FIG. 3 is a flowchart of a method for processing policy information according to Embodiment 2 of the present invention. The method in this embodiment may be based on Embodiment 1 above and implemented by an ANDSF on the network side. The method includes the following steps:

Step 301: When an UE sets up an SA with the ANDSF after accessing an EPS network through a 3GPP or non-3GPP technology, the ANDSF obtains information reported by the UE. The information may include one or more of parameters, such as subscriber identity, subscriber location information, and UE type.

Step 302: The ANDSF obtains applicability information according to the information reported by the UE, and delivers the applicability information to the UE.

Step 303: After setting up the SA, the UE initiates a policy request to the ANDSF. When receiving the policy request initiated by the UE, the ANDSF obtains policy information according to the policy request and the information reported by the UE.

Step 304: The ANDSF delivers the policy information to the UE.

In step 303 above, when the ANDSF obtains the policy information according to the policy request, the obtaining may be based on the information reported by the UE at the time of setting up the SA or the information included in the policy request initiated by the UE. If the UE reports the information at the time of setting up the SA and the time of sending the policy request, the information reported by the UE at the time of setting up the SA is generally the same as the information included in the policy request. If the information is not consistent, the ANDSF applies a preset policy as a basis of deciding which information is selected for obtaining the policy information. If the information serving as a basis for the ANDSF to obtain the policy information is different from the information serving as a basis for the ANDSF to obtain the applicability information, the ANDSF may deliver the applicability information again to update the information.

In the technical solution of this embodiment, the ANDSF obtains the applicability information first, and then obtains the policy information, but the basis and the policy for obtaining the applicability information are the same as the basis and the policy for obtaining the policy information. The applicability information is in a mapping relationship with the policy information. Therefore, the UE can identify the applicability scope of the policy information according to the applicability information, and select and utilize the policy information flexibly, which optimizes utilization of network resources.

### Embodiment 3

FIG. 4 is a flowchart of a method for processing policy information according to Embodiment 3 of the present invention. The method in this embodiment may be based on Embodiment 1 above and implemented by an ANDSF on the network side. The method includes the following steps:

Step 401: The ANDSF receives a policy request initiated by the UE, where the policy request includes information reported by the UE. The ANDSF obtains the information reported by the UE from the policy request. The information may include one or more of parameters, such as subscriber identity, subscriber location information, and UE type.

Step 402: The ANDSF obtains applicability information and policy information according to the information reported by a UE, for example, policy information generated according to the current location information of the UE. The applicability information indicates an applicability scope of the policy information.

Step 403: The ANDSF delivers the policy information and the applicability information to the UE. The ANDSF may deliver the policy information and the applicability information respectively through two messages, or add the applicability information into the policy information before delivering.

Through the technical solution of this embodiment, the ANDSF delivers applicability information in response to the policy information included in the policy request, and therefore, the UE can identify the applicability scope of the policy information according to the applicability information, and select and utilize the policy information flexibly, thereby optimizing utilization of network resources.

### Embodiment 4

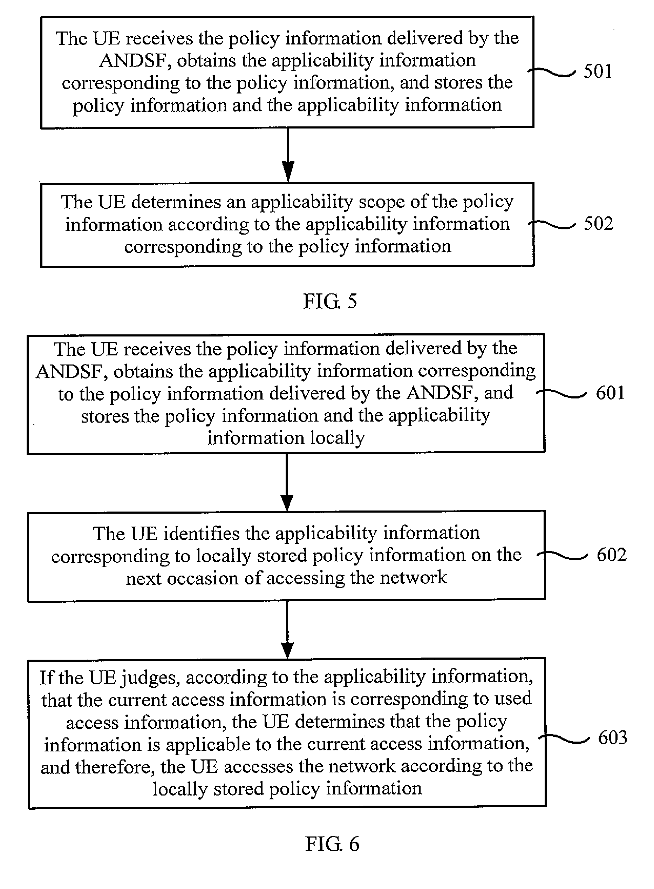

FIG. 5 is a flowchart of a method for processing policy information according to Embodiment 4 of the present invention. The method in this embodiment is implemented by a UE. The method includes the following steps:

Step 501: The UE receives policy information delivered by the ANDSF, obtains applicability information corresponding to the policy information, and stores the policy information and the applicability information, where the applicability information includes at least one of subscriber granularity, subscriber information, UE type, network granularity, and network identification information.

Step 502: The UE determines an applicability scope of the policy information according to the applicability information corresponding to the policy information.

In step 501 above, the receiving of the policy information delivered by the ANDSF and the obtaining of the applicability information corresponding to the policy information may be as follows:

The UE receives the policy information delivered by the ANDSF, and obtains the applicability information corresponding to the policy information delivered by the ANDSF.

The policy information and the applicability information may be delivered in one message or two messages, and may be delivered simultaneously or in a random order.

Through the technical solution of this embodiment, the ANDSF not only delivers policy information in response to the policy request, but also delivers applicability information corresponding to the policy information, and therefore, the UE can identify the applicability scope of the policy information according to the applicability information, and select and utilize the policy information flexibly, thereby optimizing utilization of network resources.

Alternatively, in step 501 above, the receiving of the policy information delivered by the ANDSF and the obtaining of the applicability information corresponding to the policy information may be as follows:

The UE reports the current access information to the ANDSF at the time of setting up the SA or at the time of initiating the policy request.

After initiating the policy request, the UE receives the policy information delivered by the ANDSF, and uses the reported current access information as the applicability information corresponding to the policy information according to a default policy, that is, by default, the delivered policy information is applicable to the current access information.

The current access information is the information used when the UE accesses the EPS network currently, for example, information about the mobile subscriber currently corresponding to the UE, current access mode of the UE, or current access location information of the UE. The current access information may include one or more of parameters, such as subscriber identity, UE type, and current location of the subscriber.

Through the technical solution of this embodiment, even if the ANDSF delivers no applicability information, the UE may regard the reported information as the applicability information by default according to the response made by the ANDSF to the information reported by the UE, and the reported information indicates the applicability scope of the policy information. After confirming the applicability information, the UE stores the applicability information, and therefore, the UE can confirm the applicability scope of the policy information subsequently, and select and utilize the policy information flexibly.

Based on the stored applicability information, the UE may select and utilize the policy information in diverse modes on different occasions, as described below.

### Embodiment 5

FIG. 6 is a flowchart of a method for processing policy information according to Embodiment 5 of the present invention. This embodiment may be based on Embodiment 4 and implemented by a UE. Specifically, the UE determines whether to reuse the policy information according to applicability information, especially the applicability information delivered by an ANDSF. The method in this embodiment includes the following steps:

Step 601: The UE receives the policy information delivered by the ANDSF, obtains the applicability information corresponding to the policy information delivered by the ANDSF, and stores the policy information and the applicability information locally.

Step 602: On the next occasion of accessing the network, the UE identifies the applicability information corresponding to the locally stored policy information. The UE requests to access the network again after one of the following events occurs: a certain time has elapsed, the location of the UE changes, network reselection or handover occurs, the UE is restarted after power off, and so on.

Step 603: If the UE judges, according to the applicability information, that the current access information is corresponding to used access information, the UE determines that the policy information is applicable to the current access information, and therefore, the UE accesses the network according to the locally stored policy information.

The current access information is the information about the UE's current access to the EPS network; and the used access information is the information about the UE's previous access to the network, and is stored in the UE. For example, the used access information may include one or more of parameters, such as the mobile subscriber corresponding to the previous access, identifier of the previously accessed network, and previous access location of the UE.

Through the technical solution of this embodiment, when the UE needs to access the network again on specific occasions such as restart after power off, the UE may judge whether the previously used policy information is still applicable to the current occasion according to the applicability information, and, if the previously used policy information is still applicable to the current occasion according to the applicability information, it is not necessary to obtain the same policy information again, thereby reducing the network load. Because the UE selects and utilizes the policy information flexibly, the utilization of network resources is optimized.

### Embodiment 6

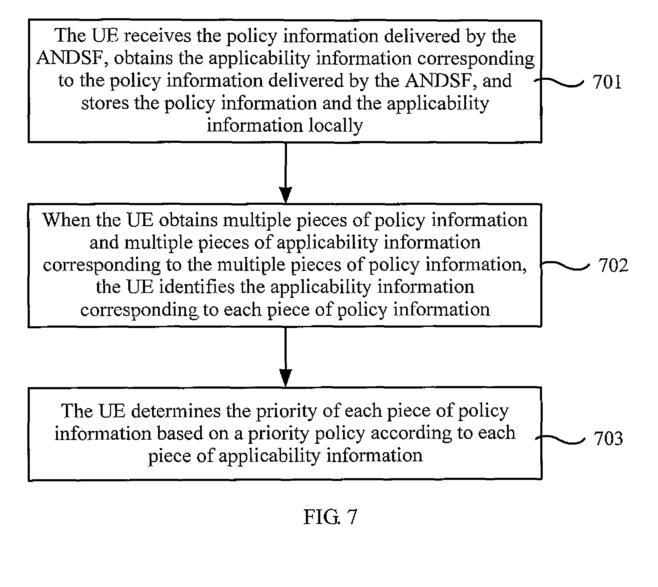

FIG. 7 is a flowchart of a method for processing policy information according to Embodiment 6 of the present invention. This embodiment may be based on Embodiment 4 and implemented by a UE. Specifically, the UE determines how to select the policy information according to applicability information, especially the applicability information delivered by an ANDSF. The method in this embodiment includes the following steps:

Step 701: The UE receives the policy information delivered by the ANDSF, obtains the applicability information corresponding to the policy information delivered by the ANDSF, and stores the policy information and the applicability information locally.

Step 702: When the UE obtains multiple pieces of policy information and multiple pieces of applicability information corresponding to the multiple pieces of policy information, the UE identifies the applicability information corresponding to every piece of policy information respectively. A piece of applicability information may be included in a piece of policy information to reflect the mapping relationship, or an association between the applicability information and the policy information is set up by using an identifier.

Step 703: The UE determines the priority of each piece of policy information based on a priority policy according to each piece of applicability information.

The technical solution of this embodiment deals with another scenario in which the UE uses the applicability information to determine the applicability scope of the policy information. In Embodiment 5, when the UE reinitiates an operation of accessing the network, the UE may use the applicability information to determine whether the used policy information is still applicable, and decide whether to reuse the locally stored policy information. In this embodiment, when the UE obtains multiple pieces of policy information, the UE may determine the priority of each piece of policy information based on the locally stored or obtained priority policy according to the applicability information corresponding to the policy information. In this way, the UE can subsequently select the proper policy information to access the network. The priority policy may also be obtained from the network. For example, the ANDSF delivers the priority policy as a part of the policy information or applicability information. Through the technical solution of this embodiment, the UE selects the proper policy information flexibly after obtaining multiple pieces of policy information, and the UE can select the proper policy information when multiple pieces of policy information conflict with each other. The foregoing technical solution enables the UE to select and utilize more appropriate policy information flexibly, thereby optimizing the utilization of network resources.

### Embodiment 7

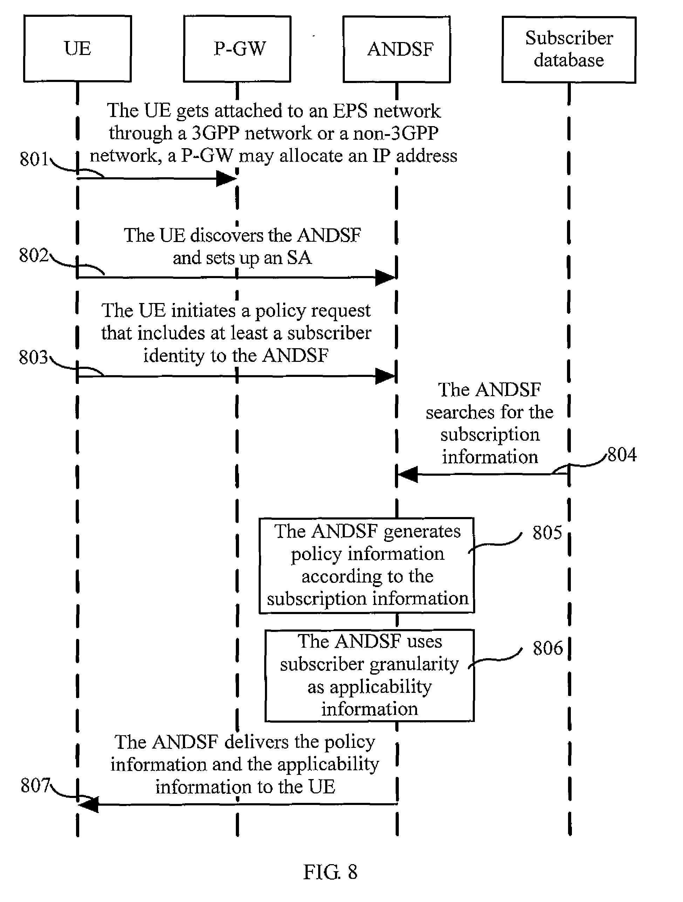

FIG. 8 is a signaling flowchart of a method for processing policy information according to Embodiment 7 of the present invention. This embodiment is based on Embodiment 3 above, and deals with a scenario in which an ANDSF obtains policy information of subscriber granularity. The method includes the following steps:

Step 801: After the UE gets attached to an EPS network through a 3GPP network or a non-3GPP network, a P-GW may allocate an IP address.

Step 802: According to the IP address, the UE discovers the ANDSF through a DNS server or a DHCP server, and sets up an SA with the ANDSF.

Step 803: The ANDSF receives a policy request initiated by the UE. The policy request at least includes a subscriber identity. The subscriber identity corresponds to a subscriber. For example, an International Mobile Subscriber Identity (IMSI) used in a 3GPP network or a Network Access Identifier (NAI) used in a non-3GPP network identifies a mobile subscriber uniquely.

Step 804: The ANDSF searches a subscriber database for subscription information corresponding to this subscriber according to the subscriber identity included in the received policy request. The subscriber database is a server for storing subscription information, and may be a Home Subscriber Server (HSS) or a Subscriber Profile Register (SPR). Many types of servers for storing subscription information in the prior art may serve as a subscriber database.

Step 805: The ANDSF generates policy information according to the subscription information.

Step 806: Because the policy information is generated for a specific subscriber and is of subscriber granularity, the ANDSF uses the subscriber granularity as applicability information. In this step, the subscriber information corresponding to the subscriber may be used as applicability information, or both the subscriber granularity and the subscriber information corresponding to the subscriber are used as applicability information. The subscriber information corresponding to the subscriber is information that may identify a subscriber, such as a subscriber identity.

Step 807: The ANDSF delivers the policy information and the applicability information to the UE. The applicability information may be added into the policy information for delivering.

Through the technical solution of this embodiment, the ANDSF delivers the applicability information along with the policy information. The applicability information is subscriber granularity and/or subscriber information, and indicates that the policy information is applicable to a specific subscriber. In this way, when the UE reinitiates an operation of accessing the network, if the UE can identify that the subscriber remains unchanged, the UE may determine, according to the applicability information, that the obtained policy information is still applicable, and the UE does not need to obtain the same policy information again by sending a policy request again, thereby reducing the network load and optimizing the utilization of network resources.

In this embodiment, the operation of obtaining the subscription information from the subscriber database is not necessarily performed after the policy request is obtained, and the subscription information may be obtained from the subscriber database at the time of setting up an SA between the UE and the ANDSF. The applicability information may be obtained before the policy request is received, and the delivery of the applicability information may occur before or after the delivery of the policy information.

In this embodiment, the ANDSF may use an Open Mobile Alliance (OMA) Device Management (DM) protocol to deliver the applicability information. For example, a "ValiditySubscriber node" is added into the OMA DM protocol, and the "Values" field of this node identifies the subscriber uniquely. The "Values" field includes, but is not limited to, an IMSI under the 3GPP access or a NAI under non-3GPP access:

The format of the "ValiditySubscriber" node is defined below:
- Occurrence: ZeroOrOneOrMore
- Format: node
- Access Types: Get, Replace
- Values: <IMSI>-This field includes subscriber information.

### Embodiment 8

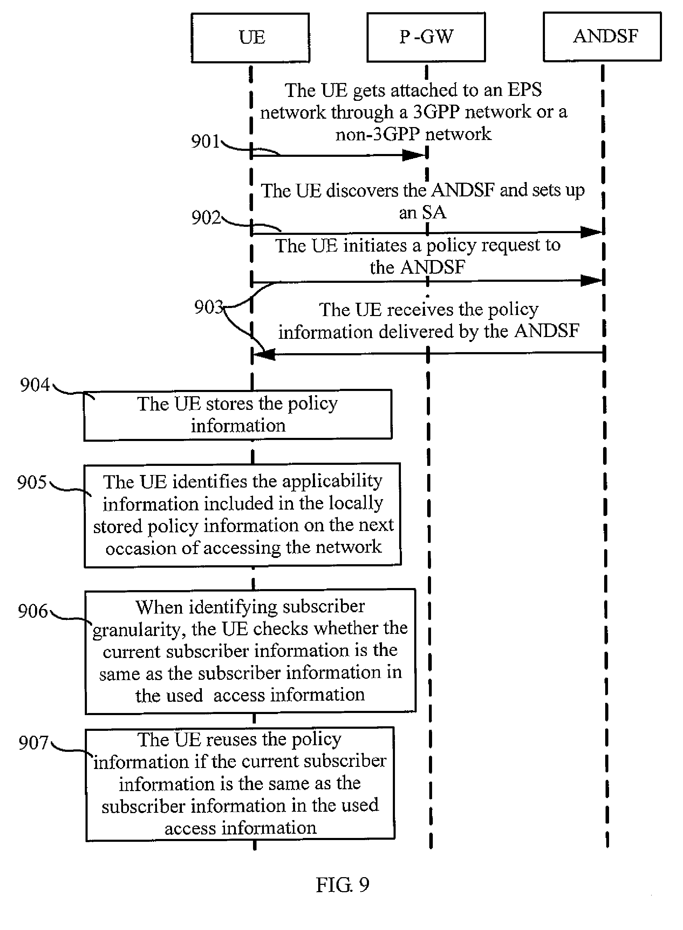

FIG. 9 is a signaling flowchart of a method for processing policy information according to Embodiment 8 of the present invention. This embodiment may be based on Embodiment 5 above, and may be implemented together with the solution of Embodiment 7. In this embodiment, a UE processes subscriber granularity as applicability information. The method in this embodiment includes the following steps:

Step 901: The UE gets attached to an EPS network through a 3GPP network or a non-3GPP network, and obtains an IP address allocated by a P-GW.

Step 902: According to the IP address, the UE discovers the ANDSF through a DNS server or a DHCP server, and sets up an SA with the ANDSF.

Step 903: The UE initiates a policy request to the ANDSF, where the policy request may include a subscriber identity, and then the UE receives policy information delivered by the ANDSF.

Step 904: When receiving the policy information delivered by the ANDSF, the UE stores the policy information, and performs network access according to the policy information.

Step 905: On the next occasion of accessing the network, the UE identifies the applicability information included in the locally stored policy information. The applicability information may also be included in a separately delivered message, and stored in the UE according to the policy information for the purpose of identification.

Step 906: When identifying that the applicability information is subscriber granularity, the UE checks whether the current subscriber information is the same as the subscriber information in the used access information in the UE, and, if the current subscriber information is the same as the subscriber information in the used access information in the UE, the UE judges that the current access information is corresponding to the used access information, and performs step 907; or, if the current subscriber information is not the same as the subscriber information in the used access information in the UE, the UE may initiate a policy request to the ANDSF again to obtain new policy information by repeating step 903.

Step 907: The UE determines that the locally stored policy information is applicable to the current access information, and therefore, according to the locally stored policy information, the UE completes the current operation of accessing the network, namely, reuses the policy information.

The current subscriber information may be obtained by the UE from the currently used Subscriber Identity Module (SIM). The subscriber information in the used access information in the UE may be the subscriber information stored in the UE as a result of using the SIM last time when the UE accesses the network last time. Through the comparison between the two pieces of subscriber information above, the UE may confirm whether the subscriber of the UE currently accessing the network changes. If the subscriber changes, for example, in the case that the subscriber replaces the SIM used in the UE, the UE needs to initiate a policy request again to obtain the policy information. If the subscriber remains unchanged, for example, the UE is powered off and then powered on after the battery of the UE is replaced, the UE does not need to initiate a policy request to obtain the policy information again, and the locally stored policy information is still applicable to the current subscriber.

Through the technical solution of this embodiment, the unnecessary exchange of the policy request and policy information is decreased, the network load is reduced, and the utilization of network resources is optimized.

### Embodiment 9

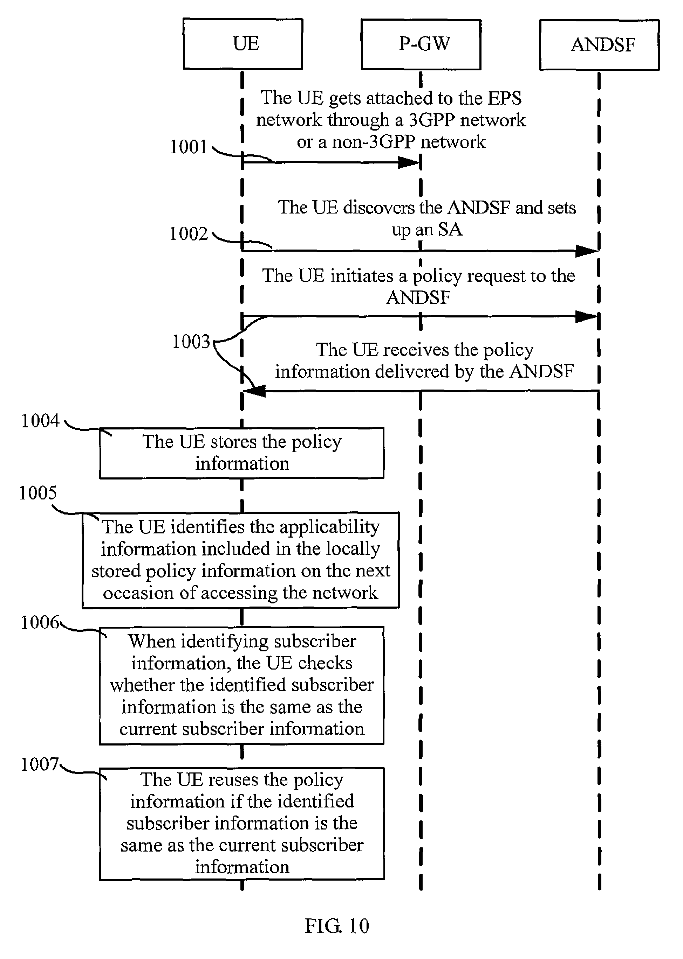

FIG. 10 is a signaling flowchart of a method for processing policy information according to Embodiment 9 of the present invention. This embodiment may be based on Embodiment 5 above, and may be implemented together with the solution of Embodiment 7. In this embodiment, an UE processes subscriber information as applicability information. The method in this embodiment includes the following steps:

Step 1001: The UE gets attached to the EPS network through a 3GPP network or a non-3GPP network, and obtains an IP address allocated by a P-GW.

Step 1002: According to the IP address, the UE discovers the ANDSF through a DNS server or a DHCP server, and sets up an SA with the AND SF.

Step 1003: The UE initiates a policy request to the ANDSF, where the policy request may include a subscriber identity, and then the UE receives policy information delivered by the ANDSF.

Step 1004: When receiving the policy information delivered by the ANDSF, the UE stores the policy information, and performs network access according to the policy information.

Step 1005: On the next occasion of accessing the network, the UE identifies the applicability information included in the locally stored policy information. The applicability information may also be included in a separately delivered message, and stored in the UE according to the policy information for the purpose of identification.

Step 1006: When identifying that the applicability information is subscriber information, the UE checks whether the identified subscriber information is the same as the current subscriber information, and, if the identified subscriber information is the same as the current subscriber information, the UE judges that the current access information is corresponding to the used access information, and performs step 1007; or, if the identified subscriber information is not the same as the current subscriber information, the UE may initiate a policy request to the ANDSF again to obtain new policy information by repeating step 1003.

Step 1007: The UE determines that the locally stored policy information is applicable to the current access information, and therefore, according to the locally stored policy information, the UE completes the current operation of accessing the network, namely, reuses the policy information.

The current subscriber information may be obtained by the UE from the currently used SIM. Through the comparison between the current subscriber information and the subscriber information included in the policy information, the UE may confirm whether the subscriber of the UE currently accessing the network changes. If the subscriber does not change, the UE does not need to initiate a policy request again to obtain the policy information, and the locally stored policy information is still applicable to the current subscriber.

Through the technical solution of this embodiment, the unnecessary exchange of the policy request and policy information is decreased, the network load is reduced, and the utilization of network resources is optimized.

In practice, if the policy information includes both subscriber granularity and subscriber information, the UE may identify whether the policy information includes subscriber granularity first. If the policy information includes subscriber granularity, the UE obtains the subscriber information by parsing the policy information.

### Embodiment 10

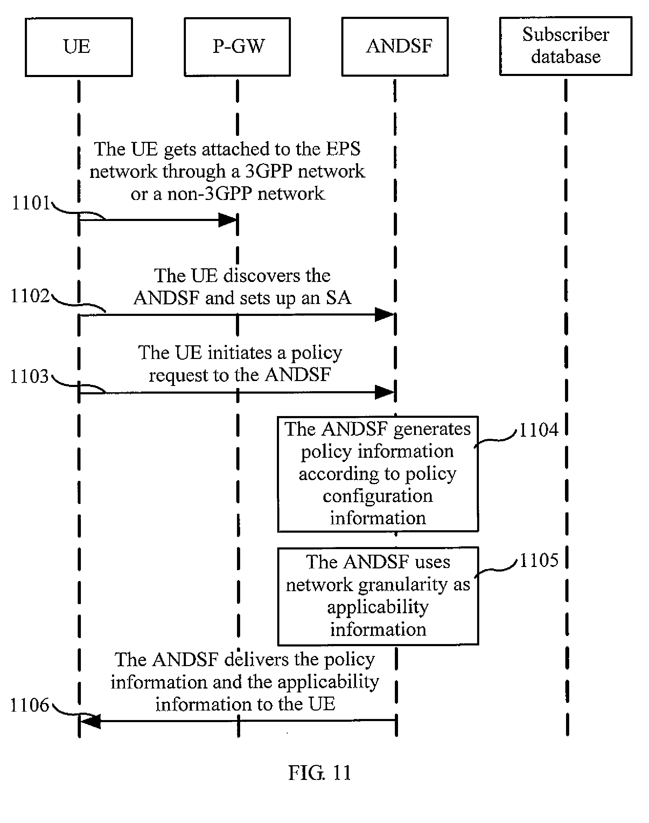

FIG. 11 is a signaling flowchart of a method for processing policy information according to Embodiment 10 of the present invention. This embodiment may be based on Embodiment 3 above, and deals with a scenario in which an ANDSF obtains policy information of network granularity. The method includes the following steps:

Step 1101: After the UE gets attached to the EPS network through a 3GPP network or a non-3GPP network, a P-GW may allocate an IP address.

Step 1102: According to the IP address, the UE discovers the ANDSF through a DNS server or a DHCP server, and sets up an SA with the ANDSF.

Step 1103: The ANDSF receives the policy request initiated by the UE. The policy request may include a subscriber identity. According to the local configuration, the ANDSF determines whether it is necessary to access the subscriber database. If it is not necessary to access the subscriber database, or the ANDSF is unable to access the subscriber database due to interface restrictions or network path restrictions, the ANDSF obtains the policy configuration information locally. The policy configuration information is preset on the ANDSF, and generally corresponds to each access network. Generally, a Home ANDSF (HANDSF) can interact with the subscriber database, but a Visited ANDSF (VANDSF) is possibly unable to interact with the subscriber database as specified in the roaming protocol or due to interface restrictions.

Step 1104: The ANDSF generates policy information according to the policy configuration information. The policy information corresponds to each access network, but is not specific to a subscriber, that is, the policy information is of network granularity.

Step 1105: The ANDSF uses network granularity as applicability information, or uses the network identification information corresponding to the policy information as applicability information. The network identification information indicates the specific access network. For example, the network identification information is a Public Land Mobile-communication Network (PLMN) identifier, or an operator identifier. Alternatively, in this step, the network granularity and the network identification information may be used together as applicability information.

Step 1106: The ANDSF delivers the policy information and the applicability information to the UE, or, the applicability information may be added into the policy information for delivering.

Through the technical solution of this embodiment, the ANDSF delivers the applicability information along with the policy information. Specifically, the applicability information is network granularity and/or network identification information, and indicates that the policy information is applicable to specific network granularity. In this way, when the UE reinitiates an operation of accessing the network, if the UE can identify that the access network remains unchanged, the UE may judge, according to the applicability information, that the obtained policy information is still applicable, and the UE does not need to obtain the same policy information again by initiating a policy request again, thereby reducing the network load and optimizing the utilization of network resources.

The applicability information of the network identification information may also be delivered through an OMA DM protocol. For example, a "ValidityPLMN" node is added into the OMA DM protocol, and the "Values" field of this node may be the same as the PLMN identifier defined in "3GPP TS 23.003":

The format of the ValidityPLMN node is defined below:
- Occurrence: ZeroOrOneOrMore
- Format: node
- Access Types: Get, Replace
- Values: < PLMN >-This field includes network identification information.

### Embodiment 11

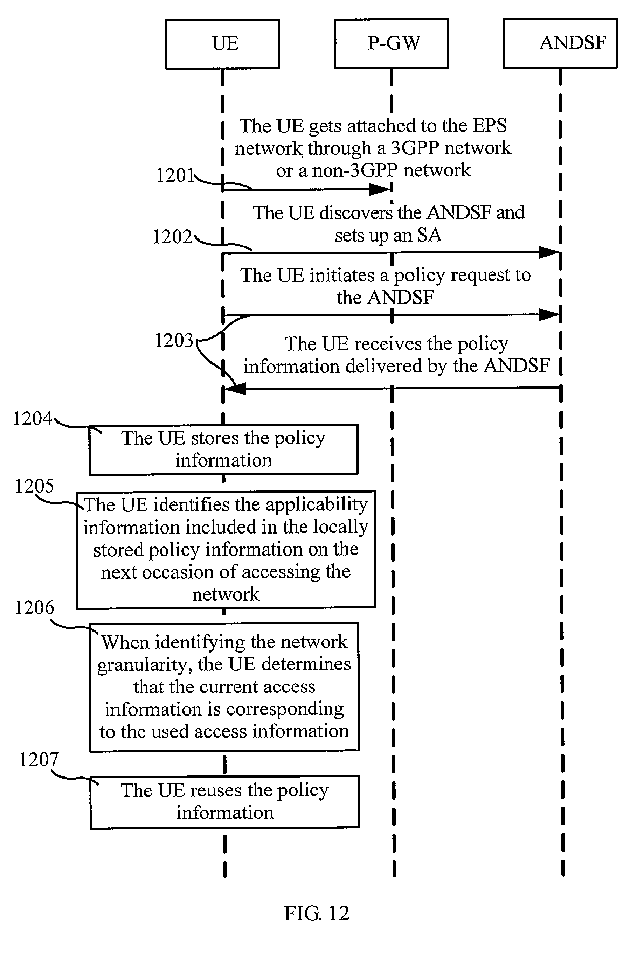

FIG. 12 is a signaling flowchart of a method for processing policy information according to Embodiment 11 of the present invention. This embodiment may be based on Embodiment 5 above, and may be implemented together with the solution of Embodiment 10. In this embodiment, a UE processes network granularity as applicability information. The method in this embodiment includes the following steps:

Step 1201: The UE gets attached to the EPS network through a 3GPP network or a non-3GPP network, and obtains an IP address allocated by a P-GW.

Step 1202: According to the IP address, the UE discovers the ANDSF through a DNS server or a DHCP server, and sets up an SA with the ANDSF.

Step 1203: The UE initiates a policy request to the ANDSF, where the policy request may include a subscriber identity, and then the UE receives policy information delivered by the ANDSF.

Step 1204: When receiving the policy information delivered by the ANDSF, the UE stores the policy information, and may perform network access according to the policy information.

Step 1205: On the next occasion of accessing the network, the UE identifies the applicability information included in the locally stored policy information. The applicability information may also be included in a separately delivered message, and stored in the UE according to the policy information for the purpose of identification.

Step 1206: When identifying that the applicability information is network granularity, the UE determines that the current access information is corresponding to the used access information by default.

Step 1207: Because the policy information of network granularity is not specific to a subscriber but is applicable to a network, the UE may determine that the locally stored policy information is applicable to the current access information, and therefore, according to the locally stored policy information, the UE completes the current operation of accessing the network, namely, reuses the policy information.

Through the technical solution of this embodiment, when the UE identifies that the applicability information is network granularity, the UE may confirm that the access network remains unchanged. For example, the subscriber is not roaming. Therefore, the UE does not need to initiate a policy request again to obtain the policy information, and the locally stored policy information is still applicable to the current operation of accessing the network.

Through the technical solution of this embodiment, the unnecessary exchange of the policy request and policy information is decreased, the network load is reduced, and the utilization of network resources is optimized.

### Embodiment 12

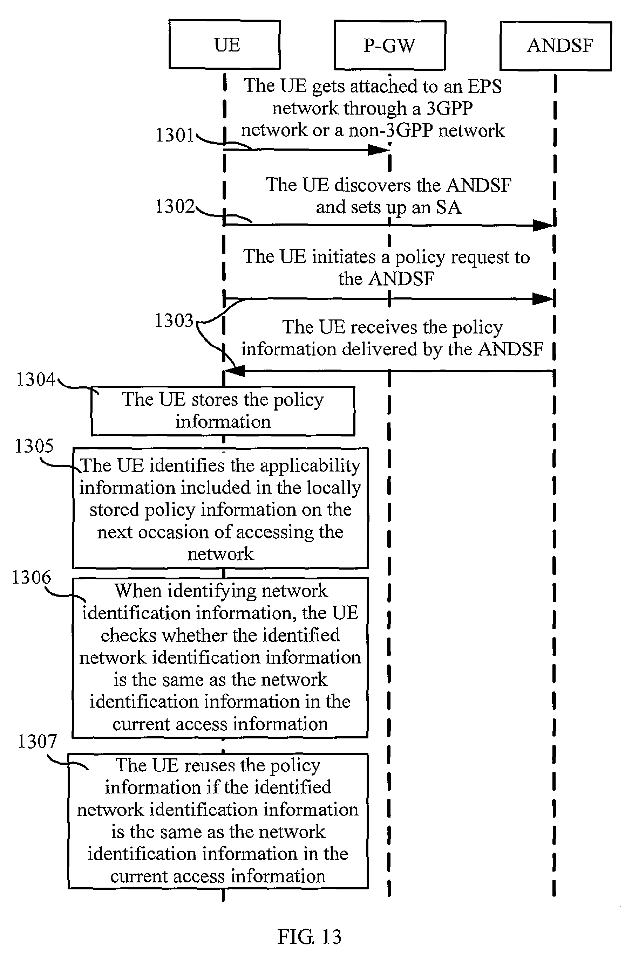

FIG. 13 is a signaling flowchart of a method for processing policy information according to Embodiment 12 of the present invention. This embodiment may be based on Embodiment 5 above, and may be implemented together with the solution of Embodiment 10. In this embodiment, an UE processes network identification information as applicability information. The method in this embodiment includes the following steps:

Step 1301: The UE gets attached to an EPS network through a 3GPP network or a non-3GPP network, and obtains an IP address allocated by a P-GW.

Step 1302: According to the IP address, the UE discovers the ANDSF through a DNS server or a DHCP server, and sets up an SA with the ANDSF.

Step 1303: The UE initiates a policy request to the ANDSF, and then receives policy information delivered by the ANDSF.

Step 1304: When receiving the policy information delivered by the ANDSF, the UE stores the policy information, and performs network access according to the policy information.

Step 1305: On the next occasion of accessing the network, the UE identifies the applicability information included in the locally stored policy information. The applicability information may also be included in a separately delivered message, and stored in the UE according to the policy information for the purpose of identification.

Step 1306: When identifying that the applicability information is network identification information such as a PLMN identifier, the UE checks whether the identified network identification information is the same as the network identification information in the current access information, and, if the identified network identification information is the same as the network identification information in the current access information, the UE judges that the current access information is corresponding to the used access information, and performs step 1307; or, if the identified network identification information is not the same as the network identification information in the current access information, the UE may initiate a policy request to the ANDSF again to obtain new policy information by repeating step 1303.

Step 1307: The UE determines that the locally stored policy information is applicable to the current access information, and therefore, according to the locally stored policy information, the UE completes the current operation of accessing the network, namely, reuses the policy information.

The network identification information in the current access information may be the network identification information obtained by the UE currently according to a local default policy, or the network identification information configured by the subscriber manually and obtained when the UE accesses the network. Through the comparison between the foregoing two pieces of network identification information, the UE may confirm whether the network corresponding to the current access of the UE changes. If the access network does not change, the UE does not need to initiate a policy request again to obtain the policy information, and the locally stored policy information is still applicable to the current network.

Through the technical solution of this embodiment, the unnecessary exchange of the policy request and policy information is decreased, the network load is reduced, and the utilization of network resources is optimized.

In practice, if the policy information includes both network granularity and network identification information, the UE may identify whether the policy information includes network granularity first. If the policy information includes network granularity, the UE obtains the network identification information by parsing the policy information.

### Embodiment 13

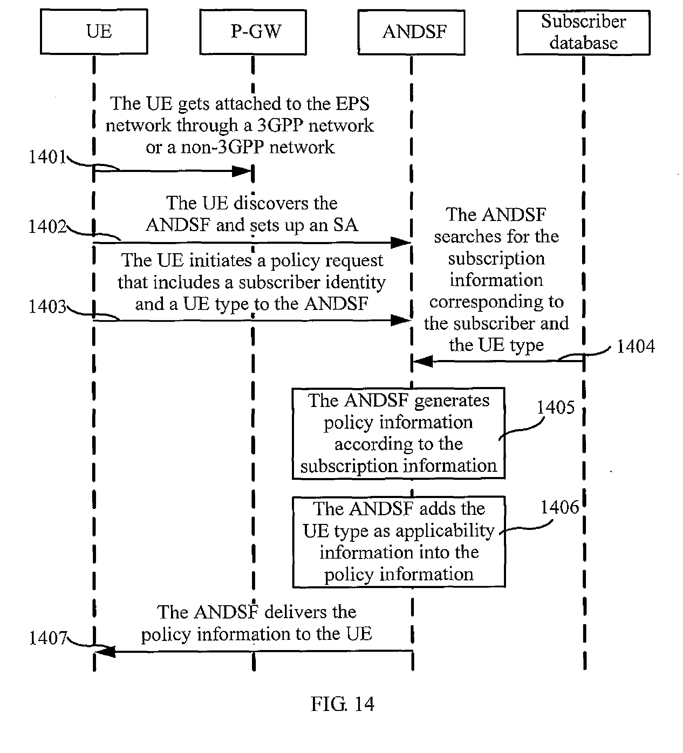

FIG. 14 is a signaling flowchart of a method for processing policy information according to Embodiment 13 of the present invention. This embodiment may be based on Embodiment 3 above, and deals with another scenario in which an ANDSF obtains the policy information. In this embodiment, the information reported by the UE includes at least the UE type, and the details of obtaining the applicability information and the policy information according to the information reported by the UE are: obtaining the policy information according to the UE type reported by the UE, and using the UE type as applicability information.

Many modes of obtaining the policy information according to the UE type exist, and one of the modes includes the following steps:

Step 1401: After the UE gets attached to the EPS network through a 3GPP network or a non-3GPP network, a P-GW may allocate an IP address.

Step 1402: According to the IP address, the UE discovers the ANDSF through a DNS server or a DHCP server, and sets up an SA with the ANDSF.

Step 1403: The ANDSF receives the policy request initiated by the UE. The policy request may include a subscriber identity and a UE type.

Step 1404: The ANDSF sends the obtained subscriber identity and UE type to the subscriber database, and searches the subscriber database for the subscription information corresponding to the subscriber and the UE type. The UE type is not necessarily included in the policy request and sent to the ANDSF, but may be obtained by other means. For example, at the time of setting up an SA between the UE and the ANDSF, the ANDSF searches the subscriber database for the corresponding UE type.

Step 1405: The ANDSF generates policy information according to the subscription information.

Step 1406: The ANDSF adds the UE type as applicability information into the policy information.

Step 1407: The ANDSF delivers the policy information to the UE, or delivers the UE type separately.

Through the technical solution of this embodiment, the policy information delivered by the ANDSF includes the UE type as applicability information, and indicates that the policy information is applicable to a specific type of UE. In this way, when the UE reinitiates an operation of accessing the network, if the UE can identify that the UE type remains unchanged, the UE may judge, according to the applicability information, that the obtained policy information is still applicable, and it is not necessary to initiate a policy request again to obtain the same policy information, thereby reducing the network load and optimizing the utilization of network resources.

For example, when a notebook computer accesses an EPS network by connecting to a UE through a data cable, the UE type obtained by the ANDSF is a computer, and the ANDSF searches the subscriber database and finds that the subscriber corresponds to this type of subscription data, and then generates the corresponding policy information. For example, the generated policy information is: The notebook computer should access the WLAN first by connecting to the UE. When the UE reinitiates an operation of accessing the network, if the UE still accesses the network by connecting to the notebook computer, it is identifiable that the UE type remains unchanged, and the used policy information is still applicable. When the UE reinitiates an operation of accessing the network, if the UE accesses the network directly, it is identifiable that the UE type changes to a mobile phone, it is necessary to initiate a policy request again to obtain policy information applicable to the mobile phone. In this case, 3GPP may be preferred. According to the UE type, it may be determined whether the obtained policy information is reusable. Therefore, the unnecessary exchange of policy information is avoided, the network load is reduced, and the utilization of network resources is optimized.

In step 1404 in this embodiment, the ANDSF does not necessarily obtain the policy information corresponding to the UE type in the foregoing mode. Instead, the ANDSF may obtain the policy information in the following way:

The ANDSF sends the subscriber identity included in the received policy request to the subscriber database, and searches the subscriber database for the subscription information corresponding to the subscriber. According to the subscription information and the obtained UE type, the ANDSF generates policy information which corresponds to both the specific subscriber and the specific UE type.

Alternatively, the ANDSF may obtain the policy information corresponding to the UE type in the following way:

When receiving the policy request, the ANDSF obtains policy configuration information locally, and generates policy information according to the UE type and the policy configuration information. Therefore, the policy information corresponds to both the specific access network and the specific UE type.

As regards the mode of obtaining the UE type, the UE type may be included in the policy request, or may be searched out in the subscriber database. Alternatively, the information reported by the UE, for example, the subscriber identity and the UE type, may be reported at the time of setting up an SA.

### Embodiment 14

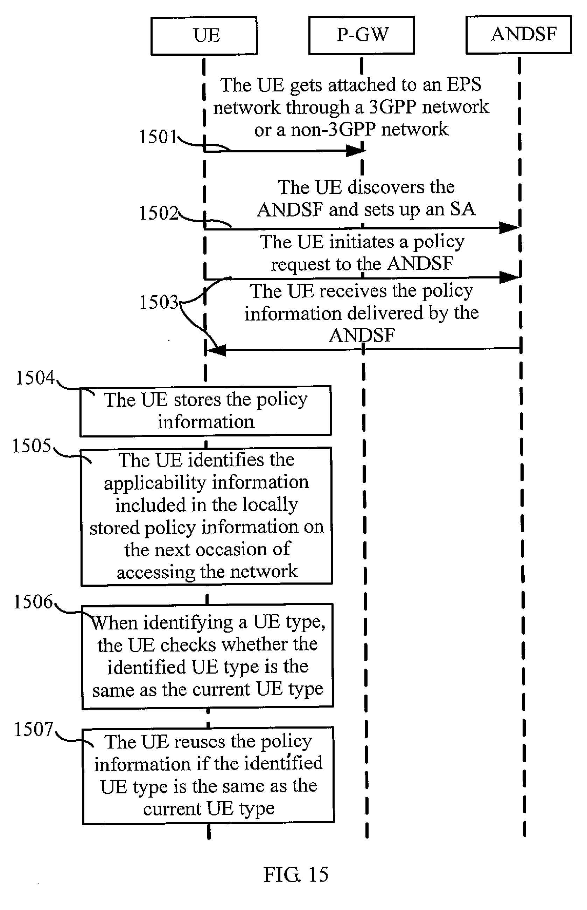

FIG. 15 is a signaling flowchart of a method for processing policy information according to Embodiment 14 of the present invention. This embodiment may be based on Embodiment 5 above, and may be implemented together with the solution of Embodiment 13. In this embodiment, a UE selects and utilizes policy information according to a UE type which serves as applicability information. The method in this embodiment includes the following steps:

Step 1501: The UE gets attached to an EPS network through a 3GPP network or a non-3GPP network, and obtains an IP address allocated by a P-GW.

Step 1502: According to the IP address, the UE discovers the ANDSF through a DNS server or a DHCP server, and sets up an SA with the ANDSF.

Step 1503: The UE initiates a policy request to the ANDSF, where the policy request may include a subscriber identity, and may further include a UE type. Afterward, the UE receives policy information delivered by the ANDSF.

Step 1504: When receiving the policy information delivered by the ANDSF, the UE stores the policy information, and performs network access according to the policy information.

Step 1505: On the next occasion of accessing the network, the UE identifies the applicability information included in the locally stored policy information. The applicability information may also be delivered separately, and then stored locally by the UE for the purpose of identification.

Step 1506: When identifying that the applicability information is a UE type such as a notebook computer and a mobile phone, the UE checks whether the identified UE type is the same as the current UE type, and, if the identified UE type is the same as the current UE type, the UE judges that the current access information is corresponding to the used access information, and performs step 1507; or, if the identified UE type is not the same as the current UE type, the UE may initiate a policy request to the ANDSF again to obtain new policy information by repeating step 1503.

Step 1507: The UE determines that the locally stored policy information is applicable to the current access information, and therefore, according to the locally stored policy information, the UE completes the current operation of accessing the network, namely, reuses the policy information.

Through the foregoing technical solution, the UE compares the two UE types according to the applicability information to confirm whether the UE type currently accessing the network is the same as the UE type previously accessing the network, and, if the UE type currently accessing the network is the same as the UE type previously accessing the network, the UE does not need to initiate a policy request again to obtain the policy information, and the locally stored policy information is still applicable to the current UE type which attempts to access the network.

Through the technical solution of this embodiment, the unnecessary exchange of the policy request and policy information is decreased, the network load is reduced, and the utilization of network resources is optimized.

The UE type may be delivered through an OMA DM protocol. For example, a "ValidityTerminal" node is added into the OMA DM protocol, and the "Values" field of this node includes UE type information. The UE type information may be a phone or a data card, supporting motion or not, and the supported access type.

The ValidityTerminal node is defined below:
- Occurrence: ZeroOrOneOrMore
- Format: node
- Access Types: Get, Replace
- Values: <TerminalType>-This field includes the UE type.

The UE type is expressed in many modes. Table 1 shows an instance of the expression.

**Table 1**

| Value | Description |
|---|---|
| Bit 0 | The UE is a phone if the value of this bit is 0, and the UE is a data card if the value of this bit is 1. |
| Bit 1 | The UE is a fixed phone if the value of this bit is 0, and the UE is a mobile phone if the value of this bit is 1. |
| Bit 2 | The UE supports 2G if the value of this bit is 1. |
| Bit 3 | The UE supports 3G if the value of this bit is 1. |
| Bit 4 | The UE supports LTE if the value of this bit is 1. |
| Bit 5 | The UE supports Wireless Fidelity (WiFi) (also known as 802.11b) if the value of this bit is 1. |
| Bit 6 | The UE supports WiMax if the value of this bit is 1. |
| Bit 7 | The UE supports CDMA if the value of this bit is 1. |

### Embodiment 15

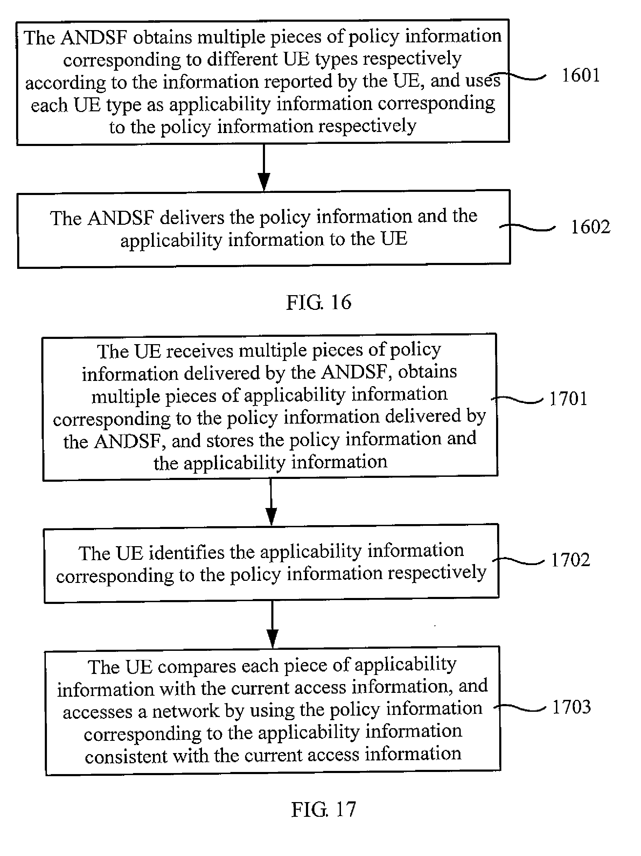

FIG. 16 is a flowchart of a method for processing policy information according to Embodiment 15 of the present invention. This embodiment may be based on Embodiment 3 and implemented by an ANDSF. The method in this embodiment includes the following steps:

Step 1601: The ANDSF obtains multiple pieces of policy information corresponding to different UE types according to the information reported by the UE, and uses each UE type as applicability information corresponding to the policy information. An association may be set up between each UE type and the policy information to ensure the mapping relationship.

Step 1602: The ANDSF delivers the policy information and the applicability information to the UE.

In this embodiment, the information reported by the UE may include no UE type. The ANDSF generates multiple pieces of policy information according to information available from the subscriber database or local policy configuration information. The multiple pieces of policy information correspond to different UE types, including all UE types corresponding to the policy information generated by the ANDSF.

Through the technical solution of this embodiment, the ANDSF delivers not only the policy information, but also the UE type corresponding to the policy information. The UE may determine the applicability information corresponding to the policy information according to the UE type, and select and use the proper policy information according to the UE type.

### Embodiment 16

FIG. 17 is a flowchart of a method for processing policy information according to Embodiment 16 of the present invention. This embodiment may be based on Embodiment 4 above and implemented with reference to Embodiment 15. The method in this embodiment includes the following steps:

Step 1701: The UE receives multiple pieces of policy information delivered by the ANDSF, obtains multiple pieces of applicability information corresponding to the multiple pieces of policy information delivered by the ANDSF, and stores the policy information and the applicability information.

Step 1702: When the UE obtains multiple pieces of policy information and multiple pieces of applicability information corresponding to the multiple pieces of policy information, the UE identifies the applicability information corresponding to each piece of policy information.

Step 1703: The UE compares each piece of applicability information with the current access information, and accesses the network by using the policy information corresponding to the applicability information consistent with the current access information.

The current access information may include one or more parameters, such as subscriber identity, UE type, and current location of the subscriber.

Taking the UE type as an example, when the UE identifies that every piece of applicability information at least includes the UE type, the UE compares each UE type with the type of the UE itself. If a UE type is corresponding to the type of this UE, the UE selects and utilizes the policy information corresponding to the applicability information.

Through the technical solution of this embodiment, the UE selects a proper piece of policy information among multiple pieces of policy information according to the applicability information. Therefore, the UE can select the policy information flexibly, which optimizes utilization of network resources.

### Embodiment 17

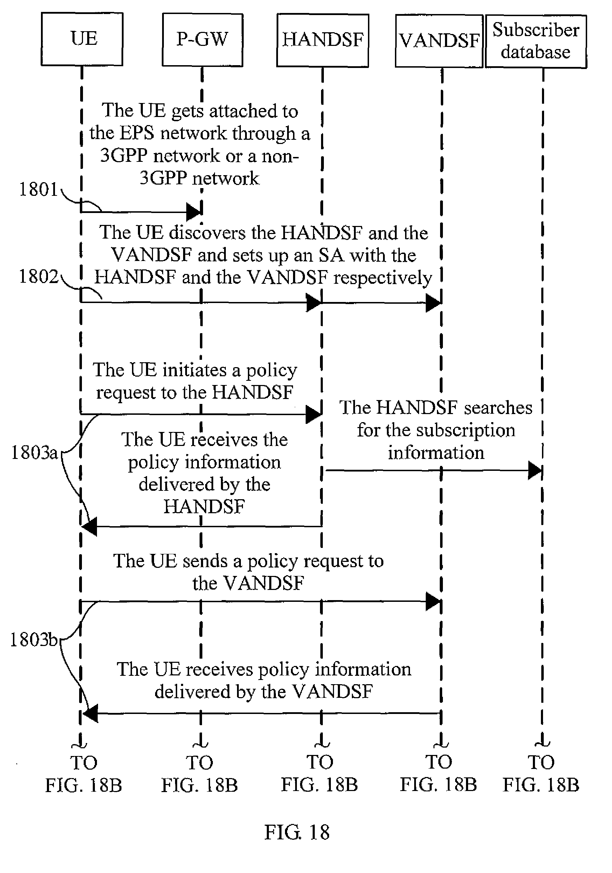

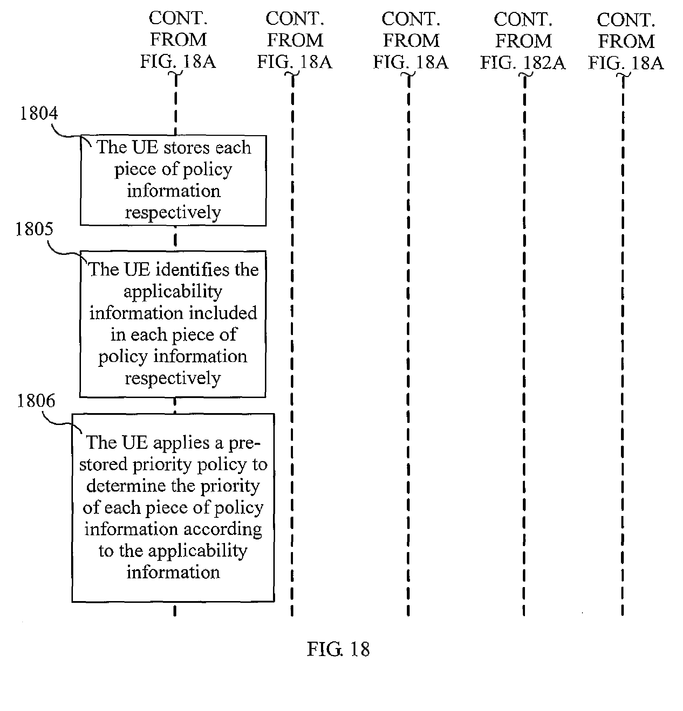

FIG. 18 is a signaling flowchart of a method for processing policy information according to Embodiment 17 of the present invention. This embodiment may be based on Embodiment 6 above, and deals with another scenario in which the UE determines the applicability scope of the policy information according to the applicability information in the policy information, namely, a scenario in which the UE obtains multiple pieces of policy information from one or more ANDSFs. This scenario typically occurs when the UE is roaming. In other words, the UE sets up an SA with the HANDSF and the VANDSF simultaneously, obtains the policy information delivered by each ANDSF respectively and processes the policy information. The method in this embodiment includes the following steps:

Step 1801: The UE gets attached to the EPS network through a 3GPP network or a non-3GPP network, and obtains an IP address allocated by a P-GW.

Step 1802: According to the IP address, the UE discovers the HANDSF and the VANDSF through a DNS server or a DHCP server, and sets up an SA with the HANDSF and the VANDSF respectively.

Step 1803a: The UE initiates a policy request to the HANDSF, and receives policy information delivered by the HANDSF. At the same time, step 1803b is performed: The UE initiates a policy request to the VANDSF, and receives policy information delivered by the VANDSF. The HANDSF generally needs to interact with the subscriber database to search for the subscription information, and generate policy information according to the subscription information. The VANDSF may generate policy information according to the local policy configuration information without accessing the subscriber database.

Step 1804: When receiving the policy information delivered by the ANDSF, the UE stores each piece of policy information respectively.

Step 1805: When the UE identifies that multiple pieces of policy information are obtained, the UE identifies the applicability information included in each piece of policy information. The applicability information in each piece of policy information obtained from the HANDSF and the VANDSF may include at least an access network type identifier indicating whether the access network is a home network or a visited network, namely, indicating whether the access network corresponding to the policy information is a home network or a visited network. For example, for a home network, the applicability information is an HPLMN; for a visited network, the applicability information is a VPLMN. Alternatively, the applicability information directly includes network identification information to indicate each network. The applicability information is not necessarily included in the policy information for delivering, but may also be delivered through an independent message so long as the applicability information is associated with and corresponds to the policy information.

Step 1806: The UE applies a pre-stored priority policy to determine the priority of each piece of policy information according to the applicability information, and then may select policy information of the highest priority to implement the current operation of accessing the network.

In this embodiment, the pre-stored priority policy includes many types. For example:

If it is identifiable that the applicability information included in the policy information is granularity-related information, it may be determined that the subscriber granularity has a higher priority than the network granularity.

If it is identifiable that the applicability information included in the policy information is a type identifier indicating the home network or visited network, it may be determined that the policy information from the VANDSF has a higher priority than the policy information from the HANDSF.

The priority policy may be configured flexibly and pre-stored, and may be a combination of multiple rules of comparing priorities. For example:

The policy information of subscriber granularity from the VPLMN has a higher priority than the policy information of subscriber granularity from the HPLMN; or

The policy information of network granularity from the VPLMN has a higher priority than the policy information of network granularity from the HPLMN; or

The policy information of subscriber granularity from the HPLMN has a higher priority than the policy information of network granularity from the VPLMN, and so on.

Through the technical solution of this embodiment, the UE can select the most appropriate policy information when the UE obtains multiple pieces of policy information simultaneously, especially when the multiple pieces of policy information conflict with each other. The subscriber or the network side may set the pre-stored priority policy flexibly, so that the UE can determine the best policy information according to the applicability information and access the network by using the best policy information, thereby optimizing utilization of network resources.

In the method for processing policy information according to the embodiments of the present invention, the applicability information for determining the applicability scope of the policy information is not limited to the types of applicability information enumerated above. Instead, the applicability information may be the current UE location indicated in the policy request initiated by the UE, or the network operator identifier corresponding to the policy information. When receiving the foregoing applicability information, the UE may identify the current location of the UE and the network operator identifier of the network currently accessed by the UE, and determine whether the obtained policy information is reusable. The applicability information may be any combination of the foregoing information.

Through the technical solution of this embodiment, the UE may obtain the policy information delivered by the ANDSF and the corresponding applicability information, and determine the applicability scope of the policy information. On the next occasion of accessing the network, the UE may judge whether the obtained policy information is reusable, and determine the most appropriate policy information if multiple pieces of policy information are obtained.

### Embodiment 18

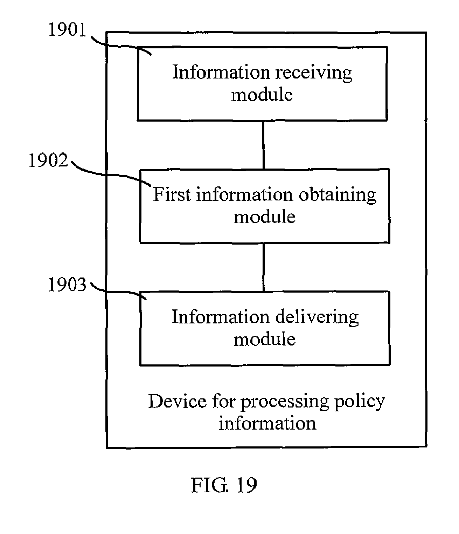

FIG. 19 is a schematic structure diagram of a device for processing policy information according to Embodiment 18 of the present invention. The device for processing policy information in this embodiment includes an information receiving module 1901, a first information obtaining module 1902, and an information delivering module 1903. The information receiving module 1901 is configured to receive information reported by a UE; the first information obtaining module 1902 is configured to obtain policy information and applicability information according to the information reported by the UE, where the applicability information indicates an applicability scope of the policy information and includes at least one of subscriber granularity, subscriber information, UE type, network granularity, and network identification information; and the information delivering module 1903 is configured to deliver the policy information and the applicability information to the UE.

When the applicability information is different parameters, the first information obtaining module may have different structures. For example:

When the applicability information is subscriber granularity and/or subscriber information corresponding to a subscriber, the first information obtaining module includes a first database searching unit and a first information generating unit. The first database searching unit is configured to search a subscriber database for subscription information corresponding to the subscriber according to the subscriber identity reported by the UE; and the first information generating unit is configured to generate policy information according to subscription information, and use the subscriber granularity and/or the subscriber information corresponding to the subscriber as applicability information.

When the applicability information is network identification information corresponding to network granularity and/or policy information, the first information obtaining module includes a first local configuring unit and a second information generating unit. The first local configuring unit is configured to obtain policy configuration information locally according to a received policy request. The second information generating unit is configured to generate policy information according to the policy configuration information, and use the network identification information corresponding to the network granularity and/or policy information as applicability information.

When the applicability information is a UE type, the first information obtaining module includes a third information generating unit. The third information generating unit is configured to obtain multiple pieces of policy information corresponding to different UE types respectively according to the information reported by the UE, and use the UE type as applicability information corresponding to the policy information respectively.

When the applicability information is a UE type, the first information obtaining module includes a second database searching unit and a fourth information generating unit. The second database searching unit is configured to send the subscriber identity and UE type reported by the UE to the subscriber database, and search the subscriber database for the subscription information corresponding to the subscriber and the UE type; and the fourth information generating unit is configured to generate policy information according to the subscription information, and use the UE type as applicability information.

When the applicability information is a UE type, the first information obtaining module includes a third database searching unit and a fifth information generating unit. The third database searching unit is configured to send the subscriber identity reported by the UE to the subscriber database, and search the subscriber database for the subscription information corresponding to the subscriber; and the fifth information generating unit is configured to generate policy information according to the subscription information and the UE type, and use the UE type as applicability information.

When the applicability information is a UE type, the first information obtaining module includes a second local configuring unit and a sixth information generating unit. The second local configuring unit is configured to obtain policy configuration information locally; and the sixth information generating unit is configured to generate policy information according to the UE type and the policy configuration information, and use the UE type as applicability information.

The device for processing policy information in this embodiment is not necessarily an ANDSF, but may also be another network element capable of selecting and discovering a network. The device for processing policy information in this embodiment may be used to implement the method for processing policy information according to the embodiments of the present invention, and may include relevant modules capable of implementing the corresponding functions. With the delivered policy information and the corresponding applicability information, the UE may determine the applicability scope of the policy information according to the applicability information, and select and utilize the policy information flexibly, thereby optimizing utilization of network resources.

### Embodiment 19

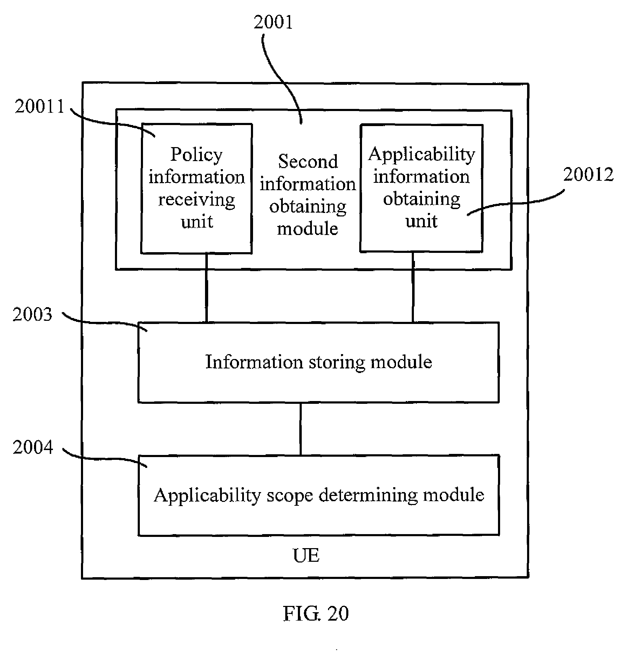

FIG. 20 is a schematic structure diagram of a UE according to Embodiment 19 of the present invention. The UE includes a second information obtaining module 2001, an information storing module 2003, and an applicability scope determining module 2004. The second information obtaining module 2001 is configured to receive policy information delivered by an ANDSF and obtain applicability information corresponding to the policy information, where the applicability information includes at least one of subscriber granularity, subscriber information, UE type, network granularity, and network identification information; the information storing module 2003 is configured to store the policy information and the applicability information; and the applicability scope determining module 2004 is configured to determine an applicability scope of the policy information according to the applicability information corresponding to the policy information.

The UE in this embodiment may be used to implement the method for processing policy information according to the embodiments of the present invention, and may include relevant modules for implementing the corresponding functions. With the obtained policy information and the corresponding applicability information, the UE can determine the applicability scope of the policy information according to the applicability information, and select and utilize the policy information flexibly, thereby optimizing utilization of network resources.

On the basis of this embodiment, the second information obtaining module 2001 may include a policy information receiving unit 20011 and an applicability information obtaining unit 20012. The policy information receiving unit 20011 is configured to receive the policy information delivered by the ANDSF; and the applicability information obtaining unit 20012 is configured to obtain the applicability information corresponding to the policy information delivered by the ANDSF.

### Embodiment 20

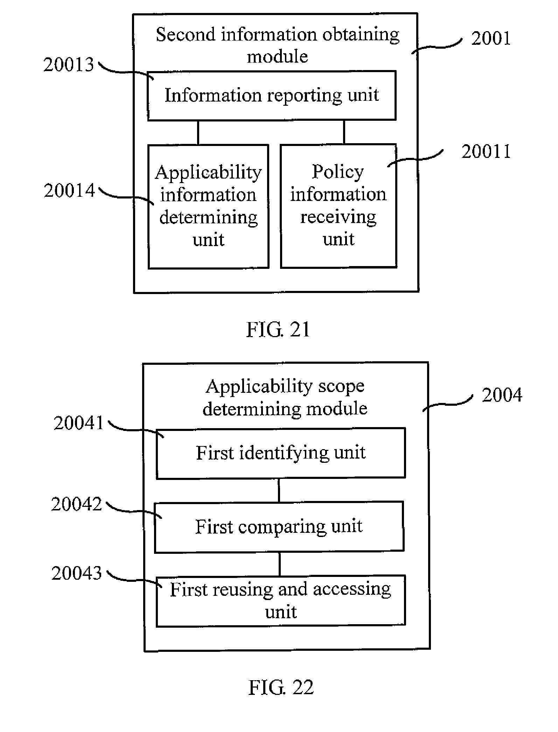

FIG. 21 is a schematic structure diagram of a UE according to Embodiment 20 of the present invention. This embodiment differs from Embodiment 19 in that the second information obtaining module 2001 includes an information reporting unit 20013, a policy information receiving unit 20011, and an applicability information determining unit 20014. The information reporting unit 20013 is configured to report the current access information to the ANDSF; the policy information receiving unit 20011 is configured to receive the policy information delivered by the ANDSF; and the applicability information determining unit 20014 is configured to use the reported current access information as the applicability information corresponding to the policy information according to a default policy when the policy information receiving unit 20011 receives the policy information.

The UE in this embodiment may be used to implement the method for processing policy information according to the embodiments of the present invention, and may include relevant modules for implementing the corresponding functions. With the obtained policy information and the corresponding applicability information, the UE can determine an applicability scope of the policy information according to the applicability information, and select and utilize the policy information flexibly, thereby optimizing utilization of network resources.

### Embodiment 21

FIG. 22 is a schematic structure diagram of a UE according to Embodiment 21 of the present invention. This embodiment may be based on Embodiment 19. The applicability scope determining module 2004 includes a first identifying unit 20041, a first comparing unit 20042, and a first reusing and accessing unit 20043. The first identifying unit 20041 is configured to identify the applicability information corresponding to the locally stored policy information on the next occasion of accessing the network; the first comparing unit 20042 is configured to check, according to the applicability information, whether the current access information is corresponding to the used access information; and the first reusing and accessing unit 20043 is configured to determine that the policy information is applicable to the current access information if the first comparing unit 20042 determines that the current access information is corresponding to the used access information, and access the network according to the locally stored policy information.

The UE in this embodiment may be used to implement the method for processing policy information according to the embodiments of the present invention, and may include relevant modules for implementing the corresponding functions. With the obtained policy information and the corresponding applicability information, the UE can determine an applicability scope of the policy information according to the applicability information, and choose flexibly whether to reuse the policy information, thereby avoiding increase of network load and optimizing utilization of network resources.

### Embodiment 22

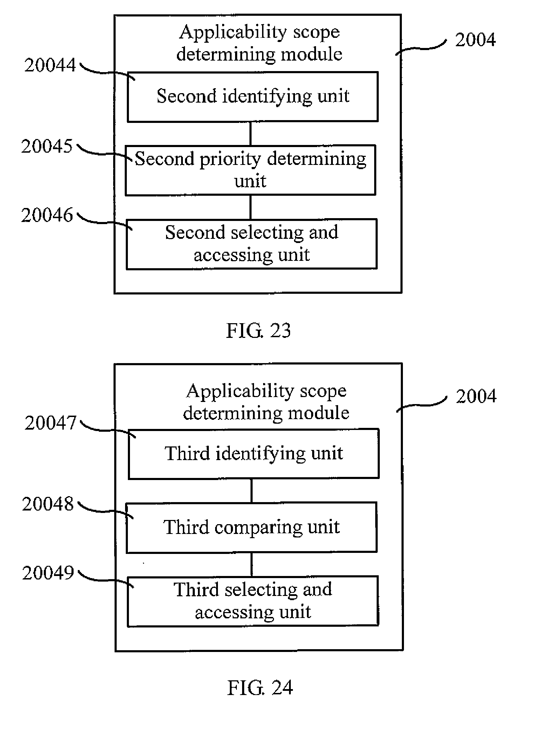

FIG. 23 is a schematic structure diagram of a UE according to Embodiment 22 of the present invention. This embodiment may be based on Embodiment 19. The applicability scope determining module 2004 includes a second identifying unit 20044, a second priority determining unit 20045, and a second selecting and accessing unit 20046. The second identifying unit 20044 is configured to identify the applicability information corresponding to each piece of policy information respectively if multiple pieces of policy information and multiple pieces of applicability information corresponding to the multiple pieces of policy information respectively are obtained; the second priority determining unit 20045 is configured to determine the priority of the policy information based on a priority policy according to the applicability information; and the second selecting and accessing unit 20046 is configured to select policy information to access the network according to the order of priorities.

The UE in this embodiment may be used to implement the method for processing policy information according to the embodiments of the present invention, and may include relevant modules for implementing the corresponding functions. With the obtained policy information and the corresponding applicability information, the UE can determine an applicability scope of the policy information according to the applicability information, and select the policy information of a higher priority flexibly, thereby optimizing utilization of network resources and overcoming the conflict between different policy information.

### Embodiment 23

FIG. 24 is a schematic structure diagram of a UE according to Embodiment 23 of the present invention. This embodiment may be based on Embodiment 19. The applicability scope determining module 2004 includes a third identifying unit 20047, a third comparing unit 20048, and a third selecting and accessing unit 20049. The third identifying unit 20047 is configured to identify the applicability information corresponding to each piece of policy information respectively if multiple pieces of policy information and multiple pieces of applicability information corresponding to the multiple pieces of policy information respectively are obtained; the third comparing unit 20048 is configured to compare each piece of applicability information with the current access information; and the third selecting and accessing unit 20049 is configured to apply, according to a comparison result of the third comparing unit 20048, the policy information corresponding to the applicability information consistent with the current access information to access the network.

The UE in this embodiment may be used to implement the method for processing policy information according to the embodiments of the present invention, and may include relevant modules for implementing the corresponding functions. With the obtained policy information and the corresponding applicability information, the UE can determine an applicability scope of the policy information according to the applicability information, and select the applicable policy information flexibly through comparison with the locally stored information, thereby optimizing utilization of network resources and overcoming the conflict between different policy information.

### Embodiment 24

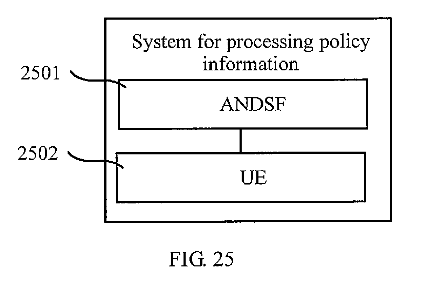

FIG. 25 is a schematic structure diagram of a system for processing policy information according to Embodiment 24 of the present invention. The system for processing policy information includes an ANDSF 2501 and a UE 2502. The ANDSF 2501 is configured to obtain applicability information and policy information according to information reported by the UE 2502, and deliver the policy information and the applicability information to the UE 2502, where the applicability information indicates the applicability scope of the policy information; and the UE 2502 is configured to receive the policy information delivered by the ANDSF 2051, obtain the applicability information corresponding to the policy information, store the policy information and the applicability information, and determine the applicability scope of the policy information according to the applicability information corresponding to the policy information.

The system for processing policy information in this embodiment may be used to implement the method for processing policy information according to the embodiments of the present invention. In this system, the ANDSF may be a device for processing policy information according to an embodiment of the present invention, and the UE may be the UE provided in an embodiment of the present invention. With the received policy information and the applicability information corresponding to the policy information, the UE can determine the applicability scope of the policy information according to the applicability information, and select and utilize the policy information flexibly, thereby optimizing utilization of network resources.

The technical solutions of the embodiments of the present invention are not necessarily applied in an EPS network, but may also be applied in other network architectures capable of implementing diverse access modes and enabling the network to deliver the network access policy information.

Persons of ordinary skill in the art should understand that all or a part of the steps of the method according to the embodiments of the present invention may be implemented by a program instructing relevant hardware. The program may be stored in a computer readable storage medium. When the program runs, the program executes steps of the method specified in any embodiment of the present invention. The storage medium may be any medium capable of storing program codes, such as a Read Only Memory (ROM), a Random Access Memory (RAM), a magnetic disk, or a Compact Disk-Read Only Memory (CD-ROM).

Finally, it should be noted that the above embodiments are used only to describe the technical solutions of the present invention instead of limiting the present invention. Although the present invention is described in detail with reference to the foregoing embodiments, those of ordinary skill in the art should understand that they can still make modifications to the technical solutions described in the foregoing embodiments or make equivalent substitutions to some technical features thereof, without departing from the spirit and scope of the technical solutions of the embodiments of the present invention.

## Claims

1. A method for processing policy information, comprising:
obtaining applicability information and policy information according to information reported by a User Equipment (UE), wherein the applicability information indicates an applicability scope of the policy information and comprises at least one of subscriber granularity, subscriber information, UE type, network granularity, and network identification information; and
delivering the policy information and the applicability information to the UE.

2. The method for processing policy information according to claim 1, wherein the obtaining the applicability information and the policy information according to the information reported by the UE comprises:
obtaining the information reported by the UE at time of setting up a Security Association (SA) with the UE;
obtaining the applicability information according to the information reported by the UE; and
obtaining the policy information according to a policy request and the information reported by the UE upon receiving the policy request initiated by the UE.

3. The method for processing policy information according to claim 1, wherein before obtaining the applicability information and the policy information according to the information reported by the UE, the method further comprises:
receiving a policy request initiated by the UE, wherein the policy request comprises the information reported by the UE.

4. The method for processing policy information according to claim 2 or claim 3, wherein the obtaining the applicability information and the policy information according to the information reported by the UE comprises:
when the applicability information is subscriber granularity and/or subscriber information corresponding to a subscriber, searching a subscriber database for subscription information corresponding to the subscriber according to a subscriber identity reported by the UE; and generating the policy information according to the subscription information, and using the subscriber granularity and/or the subscriber information corresponding to the subscriber as the applicability information; or
when the applicability information is network granularity and/or network identification information corresponding to the policy information, obtaining policy configuration information locally according to the received policy request; and generating the policy information according to the policy configuration information, and using the network granularity and/or the network identification information corresponding to the policy information as the applicability information; or
when the applicability information is a UE type, obtaining multiple pieces of policy information corresponding to different UE types respectively according to the information reported by the UE, and using the UE type as the applicability information corresponding to the policy information respectively; or
when the applicability information is a UE type, the information reported by the UE further comprises a subscriber identity, and the obtaining the applicability information and the policy information according to the information reported by the UE comprises: sending the subscriber identity reported by the UE and the UE type to a subscriber database, searching the subscriber database for subscription information corresponding to the subscriber and the UE type, generating the policy information according to the subscription information, and using the UE type as the applicability information; or
when the applicability information is a UE type, the information reported by the UE further comprises a subscriber identity, and the obtaining the applicability information and the policy information according to the information reported by the UE comprises: sending the subscriber identity reported by the UE to a subscriber database, searching the subscriber database for subscription information corresponding to the subscriber, generating the policy information according to the subscription information and the UE type, and using the UE type as the applicability information; or
when the applicability information is a UE type, obtaining policy configuration information locally, generating the policy information according to the UE type and the policy configuration information, and using the UE type as the applicability information.

5. A method for processing policy information, comprising:
receiving policy information delivered by an Access Network Discovery and Selection Function (ANDSF), obtaining applicability information corresponding to the policy information, and storing the policy information and the applicability information, wherein the applicability information comprises at least one of subscriber granularity, subscriber information, User Equipment (UE) type, network granularity, and network identification information; and
determining an applicability scope of the policy information according to the applicability information corresponding to the policy information.

6. The method for processing policy information according to claim 5, wherein the receiving the policy information delivered by the ANDSF and obtaining the applicability information corresponding to the policy information comprises:
receiving the policy information delivered by the ANDSF, and obtaining the applicability information corresponding to the policy information delivered by the ANDSF.

7. The method for processing policy information according to claim 6, wherein the determining the applicability scope of the policy information according to the applicability information corresponding to the policy information comprises:
on a next occasion of accessing a network, identifying applicability information corresponding to the policy information stored locally; if judging, according to the applicability information, that current access information is corresponding to used access information, determining that the policy information is applicable to the current access information, and therefore, accessing the network according to the locally stored policy information.

8. The method for processing policy information according to claim 7, wherein the judging, according to the applicability information, that current access information is corresponding to the used access information comprises:
if identifying that the applicability information is subscriber granularity, checking whether current subscriber information is the same as subscriber information in the used access information in the UE, and if the current subscriber information is the same as the subscriber information in the used access information in the UE, judging that the current access information is corresponding to the used access information; or
if identifying that the applicability information is subscriber information, checking whether the subscriber information is the same as the current subscriber information, and if the subscriber information is the same as the current subscriber information, judging that the current access information is corresponding to the used access information; or
if identifying that the applicability information is network granularity, determining that the current access information is corresponding to the used access information; or
if identifying that the applicability information is network identification information, checking whether the network identification information is the same as network identification information in the current access information, and if the network identification information is the same as the network identification information in the current access information, determining that the current access information is corresponding to the used access information; or
if identifying that the applicability information is a UE type, checking whether the UE type is the same as a current UE type, and if the UE type is the same as the current UE type, judging that the current access information is corresponding to the used access information.

9. The method for processing policy information according to claim 6, wherein the determining the applicability scope of the policy information according to the applicability information corresponding to the policy information comprises:
if multiple pieces of policy information and multiple pieces of applicability information corresponding to the multiple pieces of policy information respectively are obtained, identifying applicability information corresponding to each piece of policy information respectively; and
determining a priority of each piece of policy information based on a priority policy according to each piece of applicability information.

10. The method for processing policy information according to claim 9, wherein the obtaining the multiple pieces of policy information comprises:
obtaining multiple pieces of policy information from a Home ANDSF (HANDSF) and a Visited ANDSF (VANDSF), wherein the applicability information comprises a type identifier of a home network or a visited network.

11. The method for processing policy information according to claim 9, wherein the priority policy is stored locally, or comprised in the applicability information or policy information for delivering.

12. The method for processing policy information according to claim 6, wherein the determining the applicability scope of the policy information according to the applicability information corresponding to the policy information comprises:
if multiple pieces of policy information and multiple pieces of applicability information corresponding to the multiple pieces of policy information respectively are obtained, identifying applicability information corresponding to each piece of policy information respectively; and
comparing each piece of applicability information with the current access information, and accessing a network by using policy information corresponding to the applicability information consistent with the current access information.

13. The method for processing policy information according to claim 5, wherein the receiving the policy information delivered by the ANDSF and obtaining the applicability information corresponding to the policy information comprises:
reporting current access information to the ANDSF; and
receiving the policy information delivered by the ANDSF, and using the reported current access information as the applicability information corresponding to the policy information according to a default policy.

14. The method for processing policy information according to claim 12 or claim 13, wherein the current access information comprises one or more of subscriber identity, UE type, and current location of a subscriber.

15. A device for processing policy information, comprising:
an information receiving module, configured to receive information reported by a User Equipment (UE);
a first information obtaining module, configured to obtain policy information and applicability information according to the information reported by the UE, wherein the applicability information indicates an applicability scope of the policy information and comprises at least one of subscriber granularity, subscriber information, UE type, network granularity, and network identification information; and
an information delivering module, configured to deliver the policy information and the applicability information to the UE.

16. The device for processing policy information according to claim 15, wherein:
when the applicability information is subscriber granularity and/or subscriber information corresponding to a subscriber, the first information obtaining module comprises:
a first database searching unit, configured to search a subscriber database for subscription information corresponding to the subscriber according to a subscriber identity reported by the UE; and
a first information generating unit, configured to generate policy information according to the subscription information, and use the subscriber granularity and/or the subscriber information corresponding to the subscriber as the applicability information;
or
when the applicability information is network granularity and/or network identification information corresponding to the policy information, the first information obtaining module comprises:
a first local configuring unit, configured to obtain policy configuration information locally according to a received policy request; and
a second information generating unit, configured to generate policy information according to the policy configuration information, and use the network identification information corresponding to the network granularity and/or the policy information as the applicability information;
or
when the applicability information is a UE type, the first information obtaining module comprises:
a third information generating unit, configured to obtain multiple pieces of policy information corresponding to different UE types respectively according to the information reported by the UE, and use the UE type as the applicability information corresponding to the policy information respectively;
or
when the applicability information is a UE type, the first information obtaining module comprises:
a second database searching unit, configured to send the subscriber identity and UE type reported by the UE to the subscriber database, and search the subscriber database for the subscription information corresponding to the subscriber and the UE type; and
a fourth information generating unit, configured to generate policy information according to the subscription information, and use the UE type as the applicability information;
or
when the applicability information is a UE type, the first information obtaining module comprises:
a third database searching unit, configured to send the subscriber identity reported by the UE to the subscriber database, and search the subscriber database for the subscription information corresponding to the subscriber; and
a fifth information generating unit, configured to generate policy information according to the subscription information and the UE type, and use the UE type as the applicability information;
or
when the applicability information is a UE type, the first information obtaining module comprises:
a second local configuring unit, configured to obtain policy configuration information locally; and
a sixth information generating unit, configured to generate the policy information according to the UE type and the policy configuration information, and use the UE type as the applicability information.

17. A User Equipment (UE), comprising:
a second information obtaining module, configured to receive policy information delivered by an Access Network Discovery and Selection Function (ANDSF) and obtain applicability information corresponding to the policy information, wherein the applicability information comprises at least one of subscriber granularity, subscriber information, UE type, network granularity, and network identification information;
an information storing module, configured to store the policy information and the applicability information; and
an applicability scope determining module, configured to determine an applicability scope of the policy information according to the applicability information corresponding to the policy information.

18. The UE according to claim 17, wherein the second information obtaining module comprises:
a policy information receiving unit, configured to receive the policy information delivered by the ANDSF; and
an applicability information obtaining unit, configured to obtain the applicability information corresponding to the policy information delivered by the ANDSF.

19. The UE according to claim 17, wherein the second information obtaining module comprises:
an information reporting unit, configured to report current access information to the ANDSF;
a policy information receiving unit, configured to receive the policy information delivered by the ANDSF; and
an applicability information determining unit, configured to use the reported current access information as the applicability information corresponding to the policy information according to a default policy when the policy information receiving unit receives the policy information.

20. The UE according to claim 18, wherein:
the applicability scope determining module comprises:
a first identifying unit, configured to identify applicability information corresponding to locally stored policy information on a next occasion of accessing a network;
a first comparing unit, configured to check, according to the applicability information, whether current access information is corresponding to used access information; and
a first reusing and accessing unit, configured to determine that the policy information is applicable to the current access information if the first comparing unit determines that the current access information is corresponding to the used access information, and access the network according to the locally stored policy information;
or
the applicability scope determining module comprises:
a second identifying unit, configured to identify applicability information corresponding to each piece of policy information respectively if multiple pieces of policy information and multiple pieces of applicability information corresponding to the multiple pieces of policy information respectively are obtained;
a second priority determining unit, configured to determine a priority of each piece of policy information based on a priority policy according to each piece of applicability information; and
a second selecting and accessing unit, configured to select policy information to access the network according to order of priorities;
or
the applicability scope determining module comprises:
a third identifying unit, configured to identify applicability information corresponding to each piece of policy information respectively if multiple pieces of policy information and multiple pieces of applicability information corresponding to the multiple pieces of policy information respectively are obtained;
a third comparing unit, configured to compare each piece of applicability information with the current access information; and
a third selecting and accessing unit, configured to apply, according to a comparison result of the third comparing unit, policy information corresponding to applicability information consistent with the current access information to access the network.

21. A system for processing policy information, comprising:
an Access Network Discovery and Selection Function (HANDSF), configured to obtain applicability information and policy information according to information reported by a User Equipment (UE), and deliver the policy information and the applicability information to the UE, wherein the applicability information indicates an applicability scope of the policy information; and
the UE, configured to receive the policy information delivered by the ANDSF, obtain the applicability information corresponding to the policy information, store the policy information and the applicability information, and determine the applicability scope of the policy information according to the applicability information corresponding to the policy information.
